# EUROPÄISCHE PATENTSCHRIFT

(11) **EP 3 856 611 B1**
(45) Veröffentlichungstag und Bekanntmachung des Hinweises auf die Patenterteilung: **20.11.2024**
(21) Anmeldenummer: 19765695.2
(22) Anmeldetag: 05.09.2019
(51) Int. Cl.: B62D 5/04

(54) **VERFAHREN ZUM ERMITTELN EINER ZAHNSTANGENKRAFT EINES STEER-BY-WIRE-LENKSYSTEMS, STEER-BY-WIRE-LENKSYSTEM UND FAHRZEUG**
METHOD FOR DETERMINING A GEAR RACK FORCE OF A STEER-BY-WIRE STEERING SYSTEM, STEER-BY-WIRE STEERING SYSTEM AND VEHICLE
PROCÉDÉ POUR DÉTERMINER UNE FORCE EXERCÉE PAR UNE CRÉMAILLÈRE D'UN SYSTÈME DE DIRECTION À COMMANDE PAR CÂBLE ÉLECTRIQUE, SYSTÈME DE DIRECTION À COMMANDE PAR CÂBLE ÉLECTRIQUE ET VÉHICULE

(30) Priorität: 12.09.2018 DE 102018215555
(43) Veröffentlichungstag der Anmeldung: 04.08.2021
(73) Patentinhaber: Volkswagen Aktiengesellschaft, 38440 Wolfsburg (DE)
(72) Erfinder: SCHÄFER, Johannes Maria, 39615 Werben OT Berge (DE)
(86) Internationale Anmeldenummer: PCT/EP2019/073728
(87) Internationale Veröffentlichungsnummer: WO 2020/053069

(56) Entgegenhaltungen:
- DE-A1- 102008 021 848
- DE-A1- 102014 201 952
- DE-A1- 102014 211 815
- US-A1- 2007 131 476
- US-B2- 6 892 848

## Beschreibung

Die Erfindung betrifft ein Verfahren zum Ermitteln einer Zahnstangenkraft eines steer-by-wire-Lenksystems, ein steer-by-wire-Lenksystem und ein Fahrzeug.

Steer-by-wire-Lenksysteme sind typischerweise dadurch gekennzeichnet, dass eine mit der Lenkhandhabe verbundene Eingangswelle keinen mechanischen Durchgriff mehr aufweist, beispielsweise zu einer die Lenkbewegung umsetzenden Zahnstange, die mit Fahrzeugrädern gekoppelt ist. Dadurch geht auch das haptische Feedback von der Straße auf die Lenkung zur Lenkhandhabe verloren. Daher ist es bekannt, einen Aktor (z.B. einen Elektromotor) zur Erzeugung einer Reaktionskraft bzw. eines entsprechenden Rückkopplungsmoments vorzusehen, der unter anderem in Abhängigkeit vom eingestellten (Fahrzeugrad-) Lenkwinkel ein Gegenmoment somit eine Gegenkraft an der Lenkhandhabe erzeugt. Der Lenkwinkel wird dabei üblicherweise anhand einer Zahnstangenposition ermittelt. Der Reaktionskraft-Aktor wird ferner oftmals dazu verwendet, eine Positionsvorgabe (Zahnstangepositionsvorgabe) auszugeben, um die Zahnstange nach Maßgabe einer Lenkhandhabebetätigung zu bewegen und dadurch den Lenkwinkel von wenigstens einem Fahrzeugrad einzustellen.

Um dem Fahrer eine möglichst realitätsnahe Rückmeldung über die aktuelle Fahr- bzw. Lenksituation geben zu können, ist es ferner bekannt, eine Zahnstangenkraft zu ermitteln, nach deren Maßgabe die Reaktionskraft an der Lenkhandhabe eingestellt wird. Dies kann prinzipiell durch eine Messung der Zahnstangenkraft erfolgen. Aus Kostengründen wird jedoch bevorzugt, die Zahnstangenkraft zum Beispiel per Modellbildung und anhand anderer, weniger aufwendig messbarer Signale zu ermitteln, wie beispielsweise der Fahrzeuggeschwindigkeit oder der Lenkhandhabestellung. Zusätzlich oder alternativ kann eine Zahnstangenbewegung und/oder eine Gierrate bzw. Querbeschleunigung erfasst werden.

Es hat sich jedoch gezeigt, dass nicht in sämtlichen Betriebssituationen die Zahnstangenkraft zufriedenstellend ermittelt und eine realitätsnahe Reaktionskraft darauf basierend erzeugt werden kann. Dies hängt insbesondere mit nur schwer zu berücksichtigenden Reibungseffekten innerhalb des Lenksystems zusammen.

Aus der WO 2009/133 534 A2 ist es bekannt, Handlenkmomente in verschiedenen Bewegungszuständen und insbesondere bei einem erstmaligen Bewegen aus einer Neutralstellung zu erfassen und darauf basierend einen statischen Reibungswert zu bestimmen.

Die DE 10 2008 021 848 A1 offenbart die Merkmale des Oberbegriffs der Ansprüche 1 und 8.

Die DE 199 20 975 A1 offenbart das Schätzen und Kompensieren der statischen Reibung in einem Lenksystem durch Auswerten von zum Beispiel einem Lenkdrehmoment-Detektionswert.

Darüber hinaus zeigt die DE 10 2014 211 815 A1 ein Verfahren zum Ermitteln einer Zahnstangenkraft eines steer by wire-Lenksystems mit einer Lenkhandhabe, durch die ein Lenkwinkel vorgebbar ist. Am Fahrzeugrad ist ein Aktor vorgesehen zum Einstellen eines Lenkwinkels durch eine mit dem Rad gekoppelten Zahnstange. Mit der Lenkhandhabe ist zudem ein Reaktionskraftaktor verbunden, um eine Reaktionskraft in Abhängigkeit von der Zahnstangenkraft zu erzeugen.

Aufgabe der vorliegenden Erfindung ist es, das Erzeugen realitätsnaher Reaktionskräfte für eine steer-by-wire-Lenkhandhabe zu verbessern.

Diese Aufgabe wird mit einem Verfahren gemäß dem beigefügten Anspruch 1, einem steer-by-wire-Lenksystem gemäß dem beigefügten Anspruch 8 und einem Fahrzeug gemäß dem beigefügten Anspruch 9 gelöst. Es versteht sich, dass die einleitend genannten Merkmale, einzeln oder in beliebiger Kombination, auch bei der vorliegend beanspruchten Lösung vorgesehen sein können.

Erfindungsgemäß wurde erkannt, dass ein problematischer Fall für das Erzeugen einer realitätsnahen Reaktionskraft insbesondere dann auftritt, wenn keine Zahnstangenbewegungen stattfinden, da aufgrund von innerer Systemreibung (zum Beispiel innerhalb des die Zahnstange umfassenden Getriebes) tatsächlich wirkende Zahnstangenkräfte nicht in eine Bewegung umgesetzt werden. In einem solchen Fall ist es bisher nicht oder zumindest nicht mit einer zufriedenstellen Genauigkeit möglich, dem Fahrer durch Einstellen einer angemessenen Reaktionskraft eine realitätsnahe Rückmeldung zu geben.

Ein Grundgedanke der Erfindung besteht deshalb darin, einen Zustand zu erfassen, in dem eine Zahnstangenbewegung zum Beispiel durch Auslenkung der Lenkhandhabe vorgegeben, allerdings noch nicht umgesetzt wird. In diesem Zustand wird erwartungsgemäß von dem Fahrzeugradaktor nach Maßgabe der Lenkhandhabenauslenkung eine Stellkraft auf die Zahnstange ausgeübt, die jedoch aufgrund von innerer Reibung nicht in einer Zahnstangenbewegung resultiert. Diese Kraft, welche in dem geschilderten Zustand einer wirkenden Zahnstangenkraft entspricht, kann aber verwendet werden, um eine realitätsnahe Reaktionskraft einzustellen. Hierfür können zum Beispiel für das Erzeugen der Stellkraft verwendete Steuersignale oder andere Größen berücksichtigt werden, aus denen die aufgebrachte Stellkraft ermittelt werden kann.

Es versteht sich, dass sich die Erfindung primär auf einer Reaktionskraft-Erzeugung im realen Fahrzeugbetrieb und insbesondere während eines Rangier- und/oder Fahrbetriebs richtet. Anders ausgedrückt ist die Erfindung nicht für einen Testbetrieb oder Laborbetrieb vorgesehen oder zumindest nicht auf einen solchen beschränkt.

Im Detail wird ein Verfahren zum Ermitteln einer Zahnstangenkraft eines steer-by-wire-Lenksystems eines Fahrzeugs und insbesondere eines Kraftfahrzeugs und vorzugsweise eines Personenkraftwagens vorgeschlagen. Das Lenksystem umfasst:
- eine Lenkhandhabe (insbesondere ein Lenkrad), mit der ein (Fahrzeugrad-) Lenkwinkel als Funktion einer Lenkhandhabestellung vorgebbar ist;
- einen Fahrzeugradaktor (insbesondere umfassend eine Leistungselektronik und/oder einen Servo-Motor), der durch Aufbringen einer Stellkraft eingerichtet ist, den Lenkwinkel durch Bewegen einer mit wenigstens einem Fahrzeugrad gekoppelten Zahnstange des Lenksystems einzustellen;
- einen Reaktionskraftaktor (insbesondere einen Elektromotor), mit dem eine Reaktionskraft an der Lenkhandhabe nach Maßgabe einer Zahnstangenkraft erzeugbar ist;
und wobei das Verfahren umfasst:
- Ermitteln eines Reibungsbetriebs (insbesondere eines statischen bzw. inneren Reibungsbetriebs), in dem bei Änderung der Lenkhandhabestellung eine Zahnstangenbewegung ausbleibt;
und wenn der Reibungsbetrieb vorliegt:
- Ermitteln der Zahnstangenkaft anhand der Stellkraft des Fahrzeugradaktors.

Die Lenkhandhabe ist mechanisch zumindest im Sinne einer Drehmomentübertragung von der Zahnstange getrennt. Jedoch können nach Maßgabe der Lenkhandhabestellung (bzw. einer Änderung hiervon) vorzugsweise elektronische/digitale Steuersignale für den Fahrzeugradaktor erzeugt werden, der auf die Zahnstange einwirkt.

Der Fahrzeugradaktor kann allgemein zum Aufbringen eines Drehmoments zum Beispiel mittels eines hiervon umfassten Servo-Motors eingerichtet sein, wobei dieses Drehmoment im Sinne einer Stellkraft auf die Zahnstange wirken kann (beispielsweise infolge einer Übersetzung in einem Getriebe und/oder mittels einer mechanischen Kopplung zwischen dem Servo-Motor und der Zahnstange).

Vorzugsweise wird die Zahnstangenkraft nicht direkt gemessen, beispielsweise durch mit der Zahnstange zumindest mittelbar zusammenwirkende Sensoren. Beispielsweise könnten Dehnungsmesstreifen auf mit der Zahnstange gekoppelten Spurstangen eingesetzt und eine Differenz der jeweiligen Messergebnis zum Ermitteln der Zahnstangenkraft gebildet werden. Stattdessen wird die Zahnstangenkraft bevorzugt mittelbar bestimmt bzw. berechnet, zum Beispiel anhand anderweitiger Größen des Lenksystems. Dies betrifft insbesondere den Normalbetrieb, bei dem erwartete Zahnstangenbewegungen in Reaktionen auf eine Lenkhandhabebetätigung tatsächlich stattfinden. Zum Ermitteln der Bewegungen kann insbesondere eine Zahnstangenposition bzw. Änderung hiervon bestimmt werden, wobei die Zahnstangenposition mittels eines Rotorlagesensors eines Servo-Motors des Fahrzeugradaktors berechnet werden kann.

Weiter kann erfindungsgemäß die Ermittlung der Zahnstangenkraft bzw. die darauf basierende Einstellung der Reaktionskraft zu beliebigen Zeitpunkten während des Reibungsbetriebs und insbesondere während des gesamten Reibungsbetriebs erfolgen, d. h. nicht lediglich an einem Übergang zwischen dem Reibungsbetrieb und einer Zahnstangenbewegung. Dies ermöglicht eine realitätsnahen Reaktionskrafteinstellung während des gesamten Reibungsbetriebs, die zudem auf aktuell vorliegenden und nicht lediglich vorab festgelegten und zum Beispiel modellbasierten Verhältnissen beruht, da eine aktuell vorliegende Stellkraft berücksichtigt wird.

Dabei wird bei Vorliegen des Reibungsbetriebs die Zahnstangenkraft der Stellkraft des Fahrzeugradaktors gleichgesetzt. Anders ausgedrückt wird die Stellkraft des Fahrzeugradaktors während des (insbesondere gesamten) Reibungsbetriebs vorzugsweise als Zahnstangenkraft gewählt und der Erzeugung der Reaktionskraft zu Grunde gelegt. Sobald Bewegungen der Zahnstangenkraft vorliegen, kann jedoch auf eine Beendigung des Reibungsbetriebs geschlossen und die Reaktionskraft gemäß bekannter Varianten eingestellt werden, insbesondere nach Maßgabe einer modellbasiert ermittelten Zahnstangenkraft.

Zusätzlich kann die Stellkraft durch (bzw. als) die Stellgröße einer Regeleinrichtung vorgegeben werden. Bei der Regeleinrichtung kann es sich um eine Regeleinrichtung für die Zahnstange handeln, insbesondere um Zahnstangenpositionen zum Erzielen gewünschter Lenkwinkel einzustellen. Die Regeleinrichtung kann von einem Lenkungssteuergerät umfasst oder als ein solches realisiert sein. Die Regeleinrichtung kann eine Stellgröße erzeugen, die beispielsweise von dem Fahrzeugradaktor in die gewünschte Stellkraft umgesetzt wird.

Die Regeleinrichtung kann einen Soll-Ist-Vergleich durchführen, insbesondere bezüglich der Zahnstangenposition. Insbesondere kann vorgesehen sein, dass die Regeleinrichtung die Lenkhandhabestellung oder eine darauf basierend erzeugte Größe als eine Soll-Größe und eine Zahnstangenposition oder eine darauf basierend erzeugte Größe als eine Ist-Größe berücksichtigt. Dabei versteht es sich, dass die Lenkhandhabestellung oder darauf basierend erzeugte Größe eine gewünschte (Soll-) Zahnstangenposition angeben bzw. in eine solche umgerechnet werden können.

Zusätzlich oder alternativ kann die Stellgröße eine Stellgröße für eine Leistungselektronik des Fahrzeugradaktors sein, die dazu eingerichtet ist, nach Maßgabe der Stellgröße einen elektrischen (Servo-) Motor des Fahrzeugradaktors zum Erzeugen der Stellkraft anzusteuern. Genauer gesagt kann der Servo-Motor ein Drehmoment erzeugen, das zum Beispiel nach Maßgabe eines bekannten Übersetzungsverhältnisses in eine entsprechende Stellkraft übersetzt wird.

Bei einer weiteren Ausführungsform wird dann, wenn der Reibungsbetrieb nicht vorliegt, die Zahnstangenkraft unter Berücksichtigung eines Zahnstangenpositionswerts und insbesondere einer tatsächlich stattfinden Änderung hiervon bestimmt und/oder vorzugsweise ohne Berücksichtigung der Stellkraft. Dies unterscheidet sich von dem Reibungsbetrieb, bei dem die Zahnstangenkraft auf Basis der Stellkraft ermittelt wird und der Zahnstangenpositionswert keine Änderung erfährt (und vorzugsweise auch nicht bei der Zahnstangenkraft-Ermittlung berücksichtigt wird).

Gemäß einer weiteren Variante wird der Zahnstangenpositionswert mithilfe eines Rotorlagesensors des Fahrzeugradaktors ermittelt. Dies kann zum Beispiel in Kenntnis der Achsgeometrie und insbesondere bei bekannten Übersetzungsverhältnissen erfolgen, wonach die Rotorlage (bzw. der Winkelwert von zum Beispiel einer Ausgangwelle eines Servo-Motors) des Fahrzeugradaktors in eine Zahnstangenposition umrechenbar ist.

Weiter kann vorgesehen sein, dass die Zahnstangenbewegung mittelbar anhand der Bewegung einer Komponente des Fahrzeugradaktors ermittelt wird, insbesondere zum Ermitteln des Reibungsbetriebs. Beispielsweise kann eine Änderung der Rotorlage eines Servo-Motors des Fahrzeugradaktors erfasst und darauf basierend auf eine stattfindende Zahnstangenbewegung geschlossen werden. Alternativ könnte eine Zahnstangenbewegung auch mittels an der Zahnstange angebrachter Sensoren erfasst bzw. gemessen werden. Eine Lenkhandhabestellung (und insbesondere eine Änderung hiervon) kann hingegen mittels eines Winkelsensors und/oder einem Drehmomentssensor der Lenkhandhabe erfasst werden.

Die Erfindung betrifft ferner ein Steer-by-wire-Lenksystem, mit:
einer Lenkhandhabe, mit der ein Lenkwinkel als Funktion einer Lenkhandhabestellung vorgebbar ist;
einem Fahrzeugradaktor, der durch Aufbringen einer Stellkraft eingerichtet ist, den Lenkwinkel durch Bewegen einer mit wenigstens einem Fahrzeugrad gekoppelten Zahnstange des Lenksystems einzustellen;
einem Reaktionskraftaktor, mit dem eine Reaktionskraft an der Lenkhandhabe nach Maßgabe einer Zahnstangenkraft erzeugbar ist; und
einer Ermittlungseinrichtung, die dazu eingerichtet ist:
   - einen Reibungsbetrieb zu ermitteln, bei dem bei Änderung der Lenkhandhabestellung eine Zahnstangenbewegung ausbleibt;
und wenn der Reibungsbetrieb vorliegt:
   - die Zahnstangenkaft anhand die der Stellkraft des Fahrzeugradaktors zu ermitteln.

Sämtliche vorstehenden und nachstehenden Erläuterungen, Weiterbildungen und Merkmale, die sich auf gleichlautende Verfahrensmerkmale beziehen, können bei dem Lenksystem ebenso vorgesehen sein. Insbesondere kann das Lenksystem dazu eingerichtet sein, ein Verfahren gemäß jeglichen der vorstehenden und nachstehenden Aspekte auszuführen.

Die Ermittlungseinrichtung kann von wenigstens einem Lenkungssteuergerät umfasst oder als ein solches oder durch mehrere Steuergeräte realisiert sein. Insbesondere kann sie mit einem Rotorlagesensor eines Servo-Motors des Fahrzeugradaktors verbunden sein, beispielsweise um auf eine Zahnstangenbewegung zu schließen. Weiter kann sie mit einem Sensor der Lenkhandhabe verbunden sein, insbesondere mit einem Winkel- und/oder Drehmomentsensor, beispielsweise um Änderungen der Lenkhandhabestellung zu ermitteln. Letzteres kann auch lediglich mittelbar anhand von Änderungen etwaiger Drehmomentssignale festgestellt werden.

Schließlich betrifft die Erfindung auch ein Fahrzeug, umfassend ein Lenksystem gemäß einem der vorangehenden Aspekte.

Im Folgenden wird eine Ausführungsform der Erfindung anhand der beigefügten Figuren erläutert. Es stellen dar:
- Fig. 1: eine schematische Prinzipskizze eines Lenksystems gemäß einem Ausführungsbeispiel der Erfindung; und
- Fig. 2: ein Ablaufschema eines erfindungsgemäßen Verfahrens, das mit dem Lenksystem aus Figur 1 ausführbar ist.

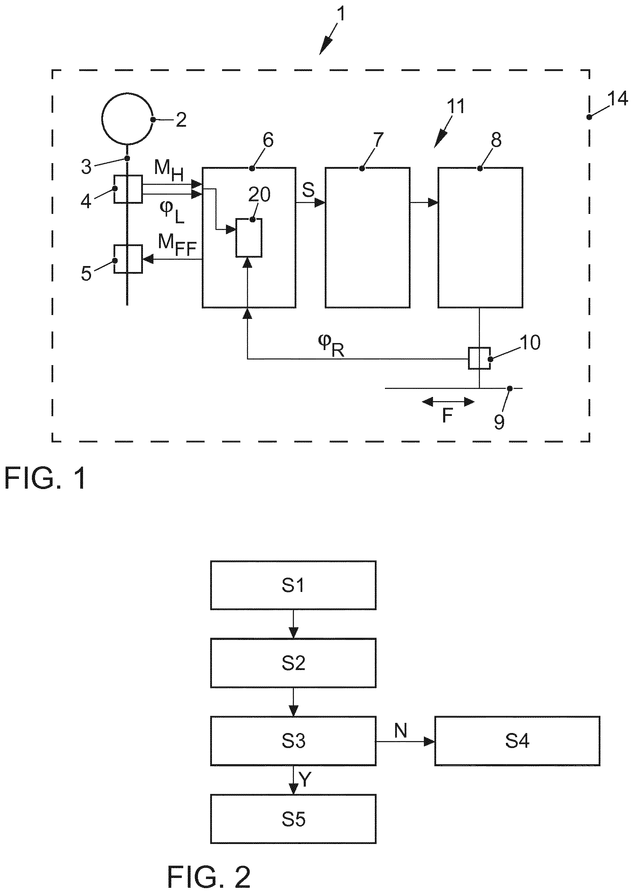

In Figur 1 ist ein (steer-by-wire-) Lenksystem 1 gemäß einem Ausführungsbeispiel der Erfindung als schematische Prinzipskizze gezeigt. Das Lenksystem 1 ist Bestandteil eines lediglich strichliert angedeuteten Fahrzeugs 14.

Das Lenksystem 1 umfasst eine Lenkhandhabe 2 in Form eines Lenkrads, das mit einer Eingangswelle 3 verbunden ist. An der Eingangswelle 3 ist ein Momentensensor 4 zur Erfassung eines Handmoments M_{H} des Fahrers angeordnet sowie ein Reaktionskraftaktor 5 zur Erzeugung eines Rückkopplungsmoments M_{FF} an der Lenkhandhabe 2, was dem Erzeugen einer Reaktionskraft entspricht bzw. in einer entsprechenden Reaktionskraft resultiert und in eine solche umrechenbar ist. Die Umrechnung von Rückkopplungsmoment M_{FF} und Reaktionskraft kann zum Beispiel in Anbetracht der Größenverhältnisse bzw. Hebel des Rückkopplungsaktuators 5, der Eingangswelle 3 und/oder der Lenkhandhabe 2 erfolgen.

Zusätzlich kann eine Winkellage (d. h. Stellung) ϕ_{L} der Lenkhandhabe 2 bestimmt werden, beispielsweise mit dem Momentensensor 4 oder mit einem separaten Sensor (nicht dargestellt), wie z.B. einem Rotorlagensensor des Reaktionskraftaktors 5. Anhand dieser Winkellage ϕ_{L} und/oder des Handmoments M_{H} sowie insbesondere deren jeweiliger Änderungen kann ermittelt werden, ob sich die Stellung der Lenkhandhabe 2 ändert oder nicht.

Weiter umfasst das steer-by-wire-Lenksystem 1 eine Steuereinrichtung in Form eines Lenkungssteuergeräts 6 sowie einen Fahrzeugradaktor 11, umfassend eine Leistungselektronik 7 und einen elektrischen Servo-Motor 8, der mit einer Zahnstange 9 beispielsweise über ein nicht dargestelltes Kugelkopf- oder Ritzelgetriebe verbunden ist. Der elektrische Servo-Motor 8 ist mit einem Rotorlagesensor 10 ausgebildet, aus dessen Rotorwinkelsignal ϕ_{R} auf die Zahnstangenposition zurückgerechnet werden kann.

In dem Lenkungssteuergerät 6 wird anhand des Handmoments M_{H} und weiterer Eingangsgrößen wie z.B. der Kraftfahrzeuggeschwindigkeit in an sich bekannter Weise als Soll-Größe ein Lenkwinkel (bzw. eine damit zusammenhängende Zahnstangenposition) ermittelt, der durch den Fahrzeugradaktor 11 bzw. dessen Servo-Motor 8 über die Zahnstange 9 an den Fahrzeugrädern eingestellt werden soll. Hierzu erzeugt das Lenkungssteuergerät 6 eine Stellgröße oder, anders ausgedrückt, ein Stellsignal S für die Leistungselektronik 7. Die Stellgröße S kann auch als Zahnstangenpositionsvorgabe bezeichnet werden, wobei über die entsprechend vorgegebene Zahnstangenposition der gewünschte Lenkwinkel eingestellt wird. Das Rotorwinkelsignal ϕ_{R} kann als Ist-Signal für das Ermitteln der Stellgröße S verwendet werden (beispielsweise durch Umrechnen in eine Ist-Zahnstangenposition). Das Lenkungssteuergerät 6 dient somit als eine Regeleinrichtung für die Zahnstangenposition sowie den hierüber eingestellten (Fahrzeugrad-) Lenkwinkel.

Die Stellgröße S kann zudem in ein von dem Servo-Motor aufgebrachtes Drehmoment und (zum Beispiel infolge einer Übersetzung durch das Kugelkopfgetriebe) in einer auf die Zahnstange 9 wirkende Stellkraft F umgerechnet werden. Diese Umrechnung kann ebenfalls von dem Lenkungssteuergerät 6 durchgeführt werden und bei Feststellen eines Reibungsbetriebs zum Einstellen des Rückkopplungsmoments M_{FF} verwendet werden.

Das Vorliegen eines Reibungsbetriebs wird durch eine vorzugsweise von dem Lenkungssteuergerät 6 umfasste Ermittlungseinrichtung 20 ermittelt. Hierfür wertet die Ermittlungseinrichtung 20 das zugeführte Rotorwinkelsignal ϕ_{R} sowie die mit der Lenkhandhabe 2 zusammenhängenden Drehmoment- und/oder Winkellagensignale M_{H}, (pi_aus. Insbesondere überprüft die Ermittlungseinrichtung 20 das Verhältnis dieser Signale zueinander, beispielsweise dahingehend, ob Änderungen des Drehmoment- und/oder Winkellagensignals M_{H}, ϕ_{L}, welche eine Änderung der Lenkhandhabestellung anzeigen, mit erwarteten Änderungen des Rotorwinkelsignals ϕ_{R} einhergehen. Letzteres würde einer Änderung der Zahnstangenposition und somit eine Zahnstangenbewegung entsprechen.

Werden jedoch derartige miteinander einhergehende Änderungen nicht festgestellt und insbesondere eine Änderung der Lenkhandhabestellung, ohne dass eine Änderung des Rotorwinkelsignals ϕ_{R} erfolgt, stellt die Ermittlungseinrichtung 20 das Vorliegen eines Reibungsbetriebs fest. In diesem Fall ist davon auszugehen, dass von dem Servo-Motor 8 erzeugte Stellkräfte F vollständig durch innere Reibung dissipiert werden und somit nicht zu einer Zahnstangenbewegung führen. Unter einen Reibungsbetrieb fällt auch ein Szenario, in dem eine vorgegebene Lenkbewegung z.B. durch ein Blockieren der Fahrzeugräder (bspw. durch einen Bordstein) nicht umgesetzt wird und eine Zahnstangenbewegung ausbleibt.

Die Erfindung macht sich dies dahingehend zunutze, als dass diese im Reibungsbetrieb erzeugten Stellkräfte F des Servo-Motors 8 verwendet werden, um ein geeignetes Rückkopplungsmoment M_{FF} an der Lenkhandhabe 2 einzustellen. Dem liegt der Gedanke zugrunde, dass eben diese Stellkräfte F im Reibungsbetrieb der aktuell wirkenden Zahnstangenkraft entsprechen. Auch im Fall einer ausbleibenden Zahnstangenbewegung und insbesondere bei einer signifikanten inneren Reibung, kann dem Fahrer somit eine realitätsnahe Rückmeldung an der Lenkhandhabe 2 gegeben werden. Dies verbessert aus Sicht des Fahrers die Bedienbarkeit des Lenksystems 1.

Im Normalbetrieb, der sich dadurch auszeichnet, dass kein Reibungsbetrieb vorliegt und Änderungen der Lenkhandhabestellung in erwarteten Bewegungen der Zahnstange 9 resultieren, wird ein Rückkopplungsmoment M_{FF} basierend auf dem aktuellen Rotorwinkelsignal ϕ_{R} und/oder einer Änderung hiervon durch das Lenksteuergerät 6 ermittelt. Insbesondere kann in an sich bekannter Weise mittels einer Modellbildung auf eine vorliegende Zahnstangenkraft geschlossen werden und nach Maßgabe dieser Zahnstangenkraft ein Wert des Rückkopplungsmoments M_{FF} bestimmt werden. Dies ist jedoch in dem oben beschriebenen Reibungsbetrieb mit bisherigen Lösungen nicht oder nur unpräzise möglich, beispielsweise da dann das Rotorwinkelsignal ϕ_{R} trotz bereits erzeugtem Handlenkmoment M_{H} unverändert bleibt. Anders ausgedrückt wird die Zahnstangenkraft und/oder Reaktionskraft im Normalbetrieb anders als im Reibungsbetreib ermittelt.

In Figur 2 ist ein Ablaufschema eines erfindungsgemäßen Verfahrens gezeigt, das mit dem Lenksystem 1 aus Figur 1 ausführbar ist. In einem Schritt S1 wird eine (etwaige) Änderung der Lenkhandhabestellung ermittelt. Dies kann beispielsweise basierend auf den vorstehend erläuterten Signalen M_{H}, ϕ_{L} erfolgen. In einem Schritt S2 wird eine (etwaige) Zahnstangenbewegung ermittelt. Dies kann beispielsweise basierend auf Änderungen des Rotorwinkelsignals ϕ_{R} ermittelt werden.

In einem Schritt S3 wird ermittelt, ob ein Reibungsbetrieb vorliegt, wofür in der vorstehend erläuterten Weise die in den Schritten S1 und S2 ermittelten etwaigen Änderungen bzw. Bewegungen verglichen werden. Wird kein Reibungsbetrieb ermittelt (Pfeil N), wird im Schritt S4 mit einer gewöhnlichen Einstellung des Rückkopplungsmoments M_{FF} zum Beispiel basierend auf einer modellbasiert ermittelten Zahnstangenkraft fortgesetzt, bei der Stellkräfte F des Servo-Motors 8 weniger stark oder auch unberücksichtigt bleiben können. Insbesondere kann in diesem Fall nicht von dem im Reibungsbetrieb angenommen Zusammenhängen ausgegangen werden, da bspw. weitere Kraftkomponente wie Gegenkräfte beim Auslenken der Fahrzeugräder auftreten und die Zahnstangenkraft beeinflussen können.

Wird ein Reibungsbetrieb ermittelt (Pfeil Y), wird im Schritt S5 das Rückkopplungsmoment M_{FF} auf Basis der aktuell vorliegenden Zahnstangenkraft ermittelt, welche der Stellkraft F gleichgesetzt wird.

### Bezugszeichenliste

- 1: Lenksystem
- 2: Lenkhandhabe
- 3: Eingangswelle
- 4: Drehmomentsensor
- 5: Reaktionskraftaktor
- 6: Lenkungssteuergerät / Regeleinrichtung
- 7: Leistungselektronik
- 8: Servo-Motor
- 9: Zahnstange
- 10: Rotorlagesensor
- 11: Fahrzeugradaktor
- 14: Fahrzeug
- 20: Ermittlungseinrichtung
- F: Stellkraft
- M_{H}: Handlenkmoment
- M_{FF}: Rückkopplungsmoment
- ϕ_{R}: Rotorwinkelsignal
- ϕ_{L}: Winkellage

## Patentansprüche

1. Verfahren zum Ermitteln einer Zahnstangenkraft eines steer-by-wire-Lenksystems (1), wobei das Lenksystem (1) umfasst:
- eine Lenkhandhabe (2), mit der ein Lenkwinkel als Funktion einer Lenkhandhabestellung vorgebbar ist;
- einen Fahrzeugradaktor (11), der durch Aufbringen einer Stellkraft (F ) eingerichtet ist, den Lenkwinkel durch Bewegen einer mit wenigstens einem Fahrzeugrad gekoppelten Zahnstange (9) des Lenksystems (1) einzustellen;
- einen Reaktionskraftaktor (5), mit dem eine Reaktionskraft an der Lenkhandhabe (2) nach Maßgabe einer Zahnstangenkraft erzeugbar ist;
**dadurch gekennzeichnet, dass** das Verfahren umfasst:
- Ermitteln eines Reibungsbetriebs, in dem bei Änderung der Lenkhandhabestellung eine Zahnstangenbewegung ausbleibt;
und wenn der Reibungsbetrieb vorliegt:
- Ermitteln der Zahnstangenkraft anhand der Stellkraft (F) des Fahrzeugradaktors (11), wobei bei Vorliegen des Reibungsbetriebs die Zahnstangenkraft der Stellkraft (F) des Fahrzeugradaktors (11) gleichgesetzt wird, und
- Erzeugen der Reaktionskraft nach Maßgabe dieser Zahnstangenkraft.

2. Verfahren nach Anspruch 1,
wobei die Stellkraft (F) durch die Stellgröße (S) einer Regeleinrichtung (6) vorgegeben wird.

3. Verfahren nach Anspruch 2,
wobei die Regeleinrichtung (6) die Lenkhandhabestellung oder eine darauf basierend erzeugte Größe als eine Soll-Größe und eine Zahnstangenposition oder eine darauf basierend erzeugte Größe als eine Ist-Größe berücksichtigt.

4. Verfahren nach Anspruch 2 der 3,
wobei die Stellgröße (S) eine Stellgröße für eine Leistungselektronik (7) des Fahrzeugradaktors (11), die dazu eingerichtet ist, nach Maßgabe der Stellgröße (S) einen elektrischen Motor (8) des Fahrzeugradaktors (9) zum Erzeugen der Stellkraft (F) anzusteuern.

5. Verfahren nach einem der vorangehenden Ansprüche,
wobei dann, wenn der Reibungsbetrieb nicht vorliegt, die Zahnstangenkraft unter Berücksichtigung eines Zahnstangenpositionswerts bestimmt wird.

6. Verfahren nach Anspruch 5,
wobei der Zahnstangenpositionswert mithilfe eines Rotorlagesensors (10) des Fahrzeugradaktors (11) ermittelt wird.

7. Verfahren nach einem der vorangehenden Ansprüche,
wobei die Zahnstangenbewegung mittelbar anhand einer Bewegung einer Komponente des Fahrzeugradaktors (11) ermittelt wird.

8. Steer-by-wire-Lenksystem (1), mit:
einer Lenkhandhabe (2), mit der ein Lenkwinkel als Funktion einer Lenkhandhabestellung vorgebbar ist;
einem Fahrzeugradaktor (11), der durch Aufbringen einer Stellkraft (F) eingerichtet ist, den Lenkwinkel durch Bewegen einer mit wenigstens einem Fahrzeugrad gekoppelten Zahnstange (9) des Lenksystems (1) einzustellen;
einem Reaktionskraftaktor (5), mit dem eine Reaktionskraft an der Lenkhandhabe (2) nach Maßgabe einer Zahnstangenkraft erzeugbar ist; **dadurch gekennzeichnet, dass** das Lenksystem weiter eine Ermittlungseinrichtung (20) umfasst, die dazu eingerichtet ist:
- einen Reibungsbetrieb zu ermitteln, wenn bei Änderung der Lenkhandhabestellung eine Zahnstangenbewegung ausbleibt;
und wenn der Reibungsbetrieb vorliegt:
- die Zahnstangenkraft anhand der Stellkraft (F) des Fahrzeugradaktors (11) zu ermitteln, wobei die Zahnstangenkraft der Stellkraft (F) des Fahrzeugradaktors (11) gleichgesetzt wird, und
- die Reaktionskraft nach Maßgabe dieser Zahnstangenkraft zu erzeugen.

9. Fahrzeug (14),
umfassend ein steer-by-wire-Lenksystem (1) nach Anspruch 8.

## Claims

1. Method for determining a gear rack force of a steer-by-wire steering system (1), wherein the steering system (1) comprises:
- a steering handle (2), by way of which a steering angle can be specified as a function of a steering handle position;
- a vehicle wheel actuator (11), which is designed to set the steering angle by moving a gear rack (9) of the steering system (1), the gear rack being coupled to at least one vehicle wheel, by applying an actuating force (F);
- a reaction force actuator (5), by way of which a reaction force on the steering handle (2) can be produced in accordance with a gear rack force;
**characterized in that** the method comprises:
- determining friction operation, in which gear rack movement does not occur when the steering handle position changes,
and, if friction operation is present:
- determining the gear rack force on the basis of the actuating force (F) of the vehicle wheel actuator (11), wherein, when friction operation is present, the gear rack force is set equal to the actuating force (F) of the vehicle wheel actuator (11), and
- generating the reaction force in accordance with this gear rack force.

2. Method according to Claim 1,
wherein the actuating force (F) is specified by the actuating variable (S) of a control device (6).

3. Method according to Claim 2,
wherein the control device (6) takes into account the steering handle position or a variable generated based on the steering handle position as a target variable and takes into account a gear rack position or a variable generated based on the gear rack position as an actual variable.

4. Method according to Claim 2 or 3,
wherein the actuating variable (S) is an actuating variable for a power electronics system (7) of the vehicle wheel actuator (11), which power electronics system is designed to drive an electric motor (8) of the vehicle wheel actuator (9) to generate the actuating force (F) in accordance with the actuating variable (S).

5. Method according to any of the preceding claims,
wherein, when friction operation is not present, the gear rack force is established taking into consideration a gear rack position value.

6. Method according to Claim 5,
wherein the gear rack position value is determined using a rotor position sensor (10) of the vehicle wheel actuator (11).

7. Method according to any of the preceding claims,
wherein the gear rack movement is determined indirectly on the basis of movement of a component of the vehicle wheel actuator (11).

8. Steer-by-wire steering system (1), comprising:
a steering handle (2), by way of which a steering angle can be specified as a function of a steering handle position;
a vehicle wheel actuator (11), which is designed to set the steering angle by moving a gear rack (9) of the steering system (1), the gear rack being coupled to at least one vehicle wheel, by applying an actuating force (F) ;
a reaction force actuator (5), by way of which a reaction force on the steering handle (2) can be produced in accordance with a gear rack force,
**characterized in that** the steering system further comprises a determination device (20),
which is designed:
- to determine friction operation, if gear rack movement does not occur when the steering handle position changes,
and, if friction operation is present:
- to determine the gear rack force on the basis of the actuating force (F) of the vehicle wheel actuator (11), wherein the gear rack force is set equal to the actuating force (F) of the vehicle wheel actuator (11), and
- to generate the reaction force in accordance with this gear rack force.

9. Vehicle (14),
comprising a steer-by-wire steering system (1) according to Claim 8.

## Revendications

1. Procédé de détermination d'une force de crémaillère d'un système de direction électrique (1), le système de direction (1) comprenant :
- une manette de direction (2) permettant de spécifier un angle de direction en fonction d'une position de manette de direction ;
- un actionneur de roue de véhicule (11) qui est adapté, en appliquant une force de réglage (F), pour régler l'angle de direction en déplaçant une crémaillère (9) du système de direction (1) qui est accouplée à au moins une roue de véhicule;
- un actionneur de force de réaction (5) permettant de générer une force de réaction sur la manette de direction (2) en fonction d'une force de crémaillère ;
**caractérisé en ce que** le procédé comprend les étapes suivantes :
- déterminer un fonctionnement à friction dans lequel il n'y a pas de mouvement de crémaillère lorsque la position de manette de direction change ;
et si un fonctionnement à friction est présent :
- déterminer la force de crémaillère sur la base de la force de réglage (F) de l'actionneur de roue de véhicule (11), la force de crémaillère étant assimilée, en présence d'un fonctionnement à friction, à la force de réglage (F) de l'actionneur de roue de véhicule (11), et
- générer la force de réaction conformément à cette force de crémaillère.

2. Procédé selon la revendication 1,
la force d'actionnement (F) étant spécifiée par la grandeur de réglage (S) d'un dispositif de régulation (6) .

3. Procédé selon la revendication 2,
le dispositif de régulation (6) prenant en compte la position de manette de direction ou une grandeur générée sur la base de celle-ci en tant que grandeur de consigne et une position de crémaillère ou une grandeur générée sur la base de celle-ci en tant que grandeur réelle.

4. Procédé selon la revendication 2 ou 3,
la grandeur de réglage (S) étant une grandeur de réglage de l'électronique de puissance (7) de l'actionneur de roue de véhicule (11), laquelle grandeur est adaptée pour commander un moteur électrique (8) de l'actionneur de roue de véhicule (9) conformément à la grandeur de réglage (S) afin de générer la force de réglage (F).

5. Procédé selon l'une des revendications précédentes,
la force de crémaillère étant déterminée avec prise en compte d'une valeur de position de crémaillère uniquement lorsque le fonctionnement à friction n'est pas présent.

6. Procédé selon la revendication 5,
la valeur de position de crémaillère étant déterminée à l'aide d'un capteur de position de rotor (10) de l'actionneur de roue de véhicule (11).

7. Procédé selon l'une des revendications précédentes,
le mouvement de crémaillère étant déterminé indirectement sur la base d'un mouvement d'un composant de l'actionneur de roue de véhicule (11).

8. Système de direction électrique (1), comprenant :
une manette de direction (2) permettant de spécifier un angle de direction en fonction d'une position de manette de direction ;
un actionneur de roue de véhicule (11) qui est adapté, en appliquant une force d'actionnement (F), pour régler l'angle de direction en déplaçant une crémaillère (9) du système de direction (1) qui est accouplée à au moins une roue de véhicule ;
un actionneur de force de réaction (5) permettant de générer une force de réaction sur la manette de direction (2) en fonction d'une force de crémaillère ;
**caractérisé en ce que** le système de direction comprend en outre un dispositif de détermination (20) qui est adapté pour
- déterminer un fonctionnement à friction s'il n'y a pas de mouvement de crémaillère lorsque la position de manette de direction change ;
et si un fonctionnement à friction est présent :
- déterminer la force de crémaillère sur la base de la force de réglage (F) de l'actionneur de roue de véhicule (11), la force de crémaillère étant assimilée, en présence d'un fonctionnement à friction, à la force de réglage (F) de l'actionneur de roue de véhicule (11), et
- générer la force de réaction conformément à cette force de crémaillère.

9. Véhicule (14), comprenant un système de direction électrique (1) selon la revendication 8.
